# EUROPEAN PATENT APPLICATION

(11) **EP 4 844 901 A1**
(43) Date of publication of application: **25.11.2026**
(21) Application number: 26178934.1
(22) Date of filing: 15.05.2026
(51) Int. Cl.: H01M 50/105, H01M 50/538, H01M 50/553, H01M 50/562, H01M 50/566

(54) **BATTERY CELL**

(30) Priority: 19.05.2025 JP 2025083447
(71) Applicant: Toyota Jidosha Kabushiki Kaisha, Toyota-shi, Aichi-ken 471-8571 (JP)
(72) Inventor: SUGIHARA, Atsushi, Toyota-shi, Aichi-ken 471-8571 (JP); NAKASHIMA, Satoshi, Toyota-shi, Aichi-ken 471-8571 (JP); ONO, Masato, Toyota-shi, Aichi-ken 471-8571 (JP); HAGA, Masayoshi, Toyota-shi, Aichi-ken 471-8571 (JP); IZUMI, Jun, Toyota-shi, Aichi-ken 471-8571 (JP); ISHIZUKA, Masahiro, Toyota-shi, Aichi-ken 471-8571 (JP); MIYAHARA, Kenta, Toyota-shi, Aichi-ken 471-8571 (JP)
(74) Representative: D Young & Co LLP

(57) **Abstract**

A battery cell (10) includes: a laminate body including a plurality of first electrode sheets (23) and a plurality of second electrode sheets (25) that are laminated along a first direction; and an outer package body (30) constituted by a film material and configured to house the laminate body, wherein: each of the first electrode sheets (23) includes a tab (23t) that protrudes in a second direction orthogonal to the first direction; the tabs (23t) constitute a foil collection portion (24) such that the tabs (23t) are joined to each other; the foil collection portion (24) includes a first joining mark (24M) at a joining portion; the outer package body (30) includes a weld portion (70) where a first circumferential edge portion and a second circumferential edge portion of the film material are welded to each other; and the first joining mark (24M) is positioned in the weld portion (70).

## Description

### BACKGROUND OF THE INVENTION

### 1. Field of the Invention

The technology disclosed in the present specification relates to a battery cell.

### 2. Description of Related Art

In a battery cell disclosed in Japanese Unexamined Patent Application Publication No. 2025-18622 (JP 2025-18622 A), an outer package body that wraps an electricity storage body is constituted by a film. Around the electricity storage body, a circumference region where circumferential edge portions of the films overlap each other is provided. In the circumference region, a weld portion where the films are welded to each other is provided. The weld portion is provided linearly along the circumference region. Since the films are welded to each other at the weld portion, the outer package body is sealed. Further, the battery cell includes an electrode plate joined to the electricity storage body. The electrode plate is drawn out from the interior of the outer package body to the exterior of the outer package body, through between joining surfaces of the films.

### SUMMARY OF THE INVENTION

In the structure of the battery cell in JP 2025-18622 A, a joining portion between the electricity storage body and the electrode plate is positioned on an inner side of the outer package body, relative to the weld portion. That is, the joining portion and the weld portion are disposed so as to be arrayed in a direction (lateral direction) crossing a lamination direction of the electricity storage body. The electrode plate protrudes in the lateral direction, by a length corresponding to the widths of the arrayed joining portion and weld portion. The physical size of the battery cell enlarges, and therefore, there is a problem of the decrease in energy density. The present specification proposes a technology for downsizing the battery cell.

A battery cell according to a first aspect of the present disclosure includes: a laminate body including a plurality of first electrode sheets and a plurality of second electrode sheets that are laminated along a first direction; and an outer package body constituted by a film material and configured to house the laminate body, wherein: each of the first electrode sheets includes a tab that protrudes in a second direction orthogonal to the first direction; the tabs of the first electrode sheets constitute a foil collection portion such that the tabs are joined to each other; the foil collection portion includes a first joining mark at a joining portion of the tabs; the outer package body includes a weld portion where a first circumferential edge portion and a second circumferential edge portion of the film material are welded to each other; and the first joining mark is positioned in the weld portion.

In the above structure, the first joining mark formed at the joining portion of the foil collection portion is positioned in the weld portion of the outer package body. Thereby, the protrusion amount in the second direction can be restrained by a quantity corresponding to the overlap between the first joining mark and the weld portion. The physical size of the battery cell can be downsized.

In the above structure, at the weld portion, the first circumferential edge portion and the second circumferential edge portion may be directly welded, or may be welded through another member.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view of a battery cell in an embodiment 1;
FIG. 2 is a top view of the battery cell;
FIG. 3 is a partial sectional view along line III-III in FIG. 2;
FIG. 4 is a sectional view before sealing of an outer package body;
FIG. 5 is a sectional view of a battery cell in a comparative example and corresponds to FIG. 3;
FIG. 6 is a partial sectional view of a battery cell in a modification of the embodiment 1;
FIG. 7 is a partial enlarged view of a region R7 in FIG. 6;
FIG. 8 is a partial enlarged view in a comparative example;
FIG. 9 is a partial sectional view of a battery cell in an embodiment 2; and
FIG. 10 is a partial sectional view of a battery cell in a modification of the embodiment 2.

### DETAILED DESCRIPTION OF EMBODIMENTS

An exemplary battery cell disclosed in the present specification may further include an external terminal joined to the foil collection portion and extending to the exterior of the outer package body. In the external terminal, a second joining mark may be formed at a joining portion between the foil collection portion and the external terminal. The second joining mark may be positioned in the weld portion.

In this configuration, the protrusion amount of the external terminal in the second direction can be restrained by a quantity corresponding to the overlap between the second joining mark and the weld portion. The physical size of the battery cell can be downsized.

An exemplary battery cell disclosed in the present specification may further include a filler having a sheet shape and disposed in the weld portion between the outer package body and the second joining mark.

In this configuration, the interference between the second joining mark and the outer package body can be restrained by the filler.

In an exemplary battery cell disclosed in the present specification, the thickness of the filler may be larger than the maximum height roughness of a surface of the second joining mark.

In this configuration, it is possible to restrain a projection of the surface of the second joining mark from piercing through the filler.

In an exemplary battery cell disclosed in the present specification, the external terminal may contain copper. A plating layer containing no copper may be disposed on a surface of the external terminal.

In this configuration, it is possible to improve the compatibility between the external terminal and the film material of the outer package body.

In an exemplary battery cell disclosed in the present specification, the foil collection portion may pass through the weld portion, and may extend to the exterior of the outer package body.

In this configuration, the foil collection portion can function also as an electrode pad for the electric connection with the exterior. It is possible to achieve the downsizing and cost reduction of the battery cell.

An exemplary battery cell disclosed in the present specification may further include a filler having a sheet shape and disposed in the weld portion between the outer package body and the first joining mark.

In this configuration, the interference between the first joining mark and the outer package body can be restrained by the filler.

In an exemplary battery cell disclosed in the present specification, the thickness of the filler may be larger than the maximum height roughness of a surface of the first joining mark.

In this configuration, it is possible to restrain a projection of the surface of the first joining mark from piercing through the filler.

In an exemplary battery cell disclosed in the present specification, the foil collection portion may contain copper. A plating layer containing no copper may be disposed on a surface of the foil collection portion.

In this configuration, it is possible to improve the compatibility between the foil collection portion and the film material of the outer package body.

### Embodiment 1

### Schematic Structure of Battery Cell 10

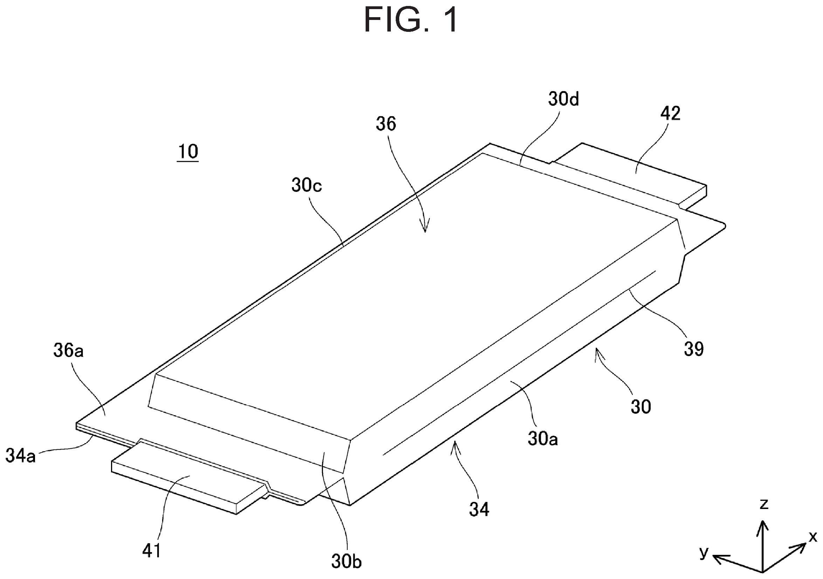

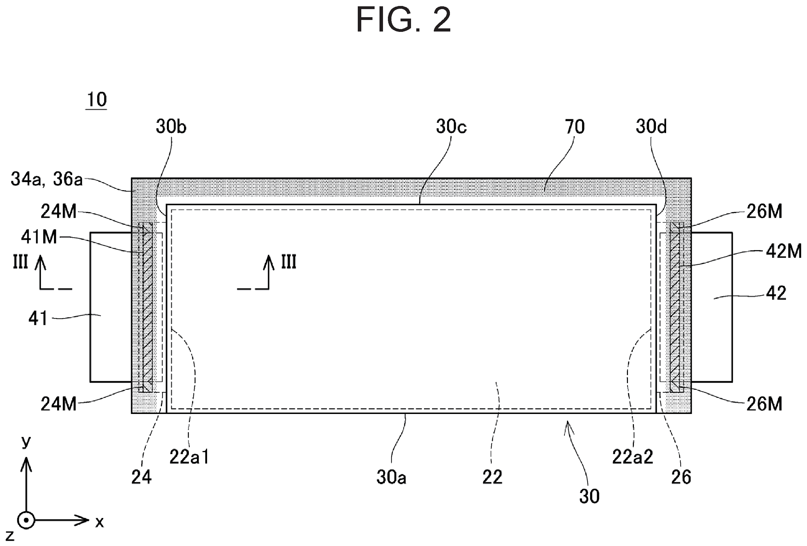

FIG. 1 is a perspective view of a battery cell 10 in an embodiment 1. FIG. 2 is a top view of the battery cell 10. In FIG. 1 and FIG. 2, the thickness direction of the battery cell 10 is referred to as a z-direction, the longer direction of the battery cell 10 is referred to as an x-direction, and the direction orthogonal to the z-direction and the x-direction is referred to as a y-direction. As for members that are repeatedly disposed, one representative member of the members is sometimes denoted by a reference character. The same goes for the other figures.

As shown in FIG. 1, the battery cell 10 in the embodiment has a rectangular flat-plate shape. At the time of the use of the battery cell 10, a plurality of battery cells 10 is laminated in the z-direction, so that a battery module is constituted.

As shown in FIG. 2, the battery cell 10 mainly includes an outer package body 30, an electrode laminate body 22, a first foil collection portion 24, a second foil collection portion 26, a first electrode portion 41, and a second electrode portion 42. In FIG. 2, portions housed in the interior of the outer package body 30 are shown by dotted lines.

The electrode laminate body 22 includes a first side surface 22a1 and a second side surface 22a2. The first foil collection portion 24 protrudes from the first side surface 22a1 in the -x-direction. An end portion of the first electrode portion 41 on the +x-directional side is joined to the first foil collection portion 24 by an electrode joining mark 41M. In FIG. 2, the electrode joining mark 41M is shown by hatching. An end portion of the first electrode portion 41 on the -x-directional side extends to the exterior of the outer package body 30.

The second foil collection portion 26 protrudes from the second side surface 22a2 in the +x-direction. An end portion of the second electrode portion 42 on the -x-directional side is joined to the second foil collection portion 26 by an electrode joining mark 42M. In FIG. 2, the electrode joining mark 42M is shown by hatching. An end portion of the second electrode portion 42 on the +x-directional side extends to the exterior of the outer package body 30.

The outer package body 30 includes side surfaces 30a to 30d. The side surfaces 30a, 30c are side surfaces along the x-direction. The side surfaces 30b, 30d are side surfaces along the y-direction. Further, the outer package body 30 includes a frame portion 36a and a frame portion 34a. A weld portion 70 is provided at a portion where the frame portion 36a and the frame portion 34a are overlapped. In FIG. 2, the weld portion 70 is shown by dot hatching. The weld portion 70 is a region where the frame portion 34a and the frame portion 36a adhere to each other by heat welding. At the weld portion 70, a first circumferential edge portion and a second circumferential edge portion may be directly welded, or may be welded through another member. The outer package body 30 is sealed by the weld portion 70.

### Specific Structure of Battery Cell 10

As for the above-described first foil collection portion 24 and second foil collection portion 26, one thereof functions as a negative electrode, and the other thereof functions as a positive electrode. Moreover, the structure of the first foil collection portion 24 and the structure of the second foil collection portion 26 are roughly the same. Accordingly, the specific structure of the vicinity of the first foil collection portion 24 will be described below. The description of the specific structure of the vicinity of the second foil collection portion 26 is omitted.

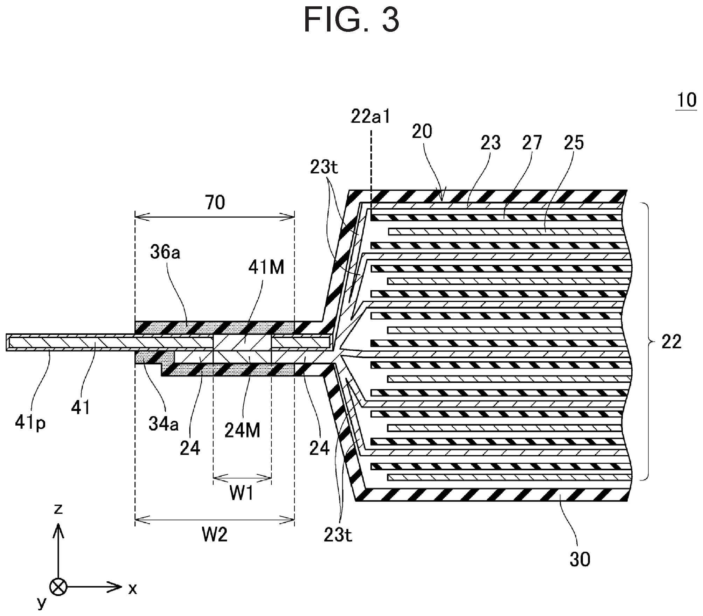

FIG. 3 shows a partial sectional view along line III-III in FIG. 2. FIG. 3 is a sectional view of an end portion of the battery cell 10 on the -x-directional side. In FIG. 3, the weld portion 70 is shown by dot hatching. The electricity storage body 20 is a chargeable and dischargeable battery element, and outputs direct-current voltage. The electricity storage body 20 is immersed in an electrolytic solution with which the interior of the outer package body 30 is filled. The electricity storage body 20 includes the electrode laminate body 22 and the first foil collection portion 24. The electrode laminate body 22 is a laminate body in which a plurality of negative electrode current collection foils 23 and a plurality of positive electrode current collection foils 25 are alternately laminated with separators 27 therebetween. The negative electrode current collection foils 23, the positive electrode current collection foils 25, and the separators 27 are laminated in the z-direction.

An end portion of the separator 27 in the -x-direction protrudes in the -x-direction, relative to an end portion of the positive electrode current collection foil 25 in the -x-direction. Thereby, by the separator 27, it is possible to surely prevent the short circuit between the negative electrode current collection foil 23 and the positive electrode current collection foil 25.

The electrode laminate body 22 includes a first surface 22s1, a second surface 22s2, and a first side surface 22a1. The first surface 22s1 is a surface on one side (+z-directional side) in the lamination direction. The second surface 22s2 is a surface on the other side (-z-directional side) in the lamination direction. The first side surface 22a1 is a side surface in a direction (-x-direction) crossing the lamination direction.

As shown in FIG. 2 and FIG. 3, the negative electrode current collection foils 23 include tabs 23t respectively. The tabs 23t protrude from the first side surface 22a1 in the -x-direction. That is, the tabs 23t protrude from end portions of the separators 27 in the -x-direction to the -x-directional side. As shown in FIG. 3, the first foil collection portion 24 is a portion where the tabs 23t are bundled. The first foil collection portion 24 is provided on the first side surface 22al of the electrode laminate body 22. The first foil collection portion 24 extends from the first side surface 22a1 along the x-direction, in a linear manner. In FIG. 3, the tabs 23t in the bundled state are simplified and illustrated as one first foil collection portion 24.

At the first foil collection portion 24, a foil joining mark 24M is formed. The foil joining mark 24M is provided over the whole length of the first foil collection portion 24 in the y-direction. The tabs 23t are joined to each other at a region where the foil joining mark 24M is provided. The foil joining may be performed in various ways, and for example, may be performed by laser joining or ultrasonic joining. By the foil joining mark 24M, it is possible to enhance the seal property of the first foil collection portion 24. Consequently, it is possible to restrain the communication between the interior and exterior of the outer package body 30 through the first foil collection portion 24.

As shown FIG. 2 and FIG. 3, the first electrode portion 41 has a flat-plate shape that extends along the x-direction. The first electrode portion 41 is composed of a material containing copper. For example, the material of the first electrode portion 41 may be copper or a copper alloy. On the surface of the first electrode portion 41, a plating layer 41p is disposed. The plating layer 41p is composed of a material containing no copper. For example, the material of the plating layer 41p may be composed of an alloy containing nickel, chromium, silver, gold, tin, or the like.

The first electrode portion 41 passes through between joining surfaces of the frame portion 36a and the frame portion 34a, and extends from the inside of the outer package body 30 to the outside of the outer package body 30. At a region of the first electrode portion 41 on the +x-directional side, a lower surface of the first electrode portion 41 contacts with an upper surface of the first foil collection portion 24. At the first electrode portion 41, an electrode joining mark 41M is formed. The electrode joining mark 41M may be provided over the whole length of the first foil collection portion 24 in the y-direction. The first electrode portion 41 and the first foil collection portion 24 are joined to each other at a region where the electrode joining mark 41M is provided. The joining may be performed in various ways, and for example, may be performed by laser joining or ultrasonic joining.

As shown in FIG. 2, the weld portion 70 linearly extends in the y-direction, across the first electrode portion 41 and the first foil collection portion 24. Further, the foil joining mark 24M and the electrode joining mark 41M are positioned in the weld portion 70. As shown in FIG. 3, at the weld portion 70, the frame portion 36a is welded to upper surfaces of the first electrode portion 41 and the electrode joining mark 41M. Further, at the weld portion 70, the frame portion 34a is welded to lower surfaces of the first foil collection portion 24 and the first electrode portion 41. At the weld portion 70, the frame portion 34a is welded to the frame portion 36a at a region where the first electrode portion 41 and the first foil collection portion 24 do not exist.

### Structure of Outer Package Body 30

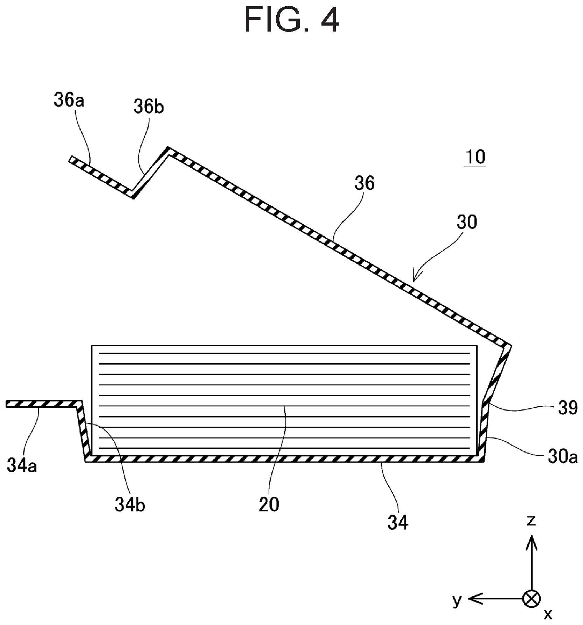

FIG. 4 is a sectional view of the battery cell 10 before the outer package body 30 is sealed. As shown in FIG. 4, the outer package body 30 is constituted by a thin film. The film that constitutes the outer package body 30 is a laminate film in which resin coating films are provided on both surfaces of an aluminum foil. The film that constitutes the outer package body 30 is formed in a container shape that includes a bottom portion 34 and a lid portion 36, by embossing. On the side surface 30a of the outer package body 30, a fold line 39 is provided. The lid portion 36 can swing around the fold line 39 with respect to the bottom portion 34. The bottom portion 34 includes the frame portion 34a and a cup portion 34b. The cup portion 34b has a cup shape that includes a concave portion on an upper surface. The frame portion 34a is a planar portion that is provided around the cup portion 34b. As shown in FIG. 1, the frame portion 34a is provided around the cup portion 34b that is other than the side surface 30a.

As shown in FIG. 4, the electricity storage body 20 is disposed in the cup portion 34b. The lid portion 36 includes the frame portion 36a and a cap portion 36b. The cap portion 36b has a cap shape that includes a concave portion on a lower surface. The frame portion 36a is a planar portion that is provided around the cap portion 36b. As shown in FIG. 1, the frame portion 36a is provided around the cap portion 36b that is other than the side surface 30a. When the lid portion 36 is closed, an upper portion of the electricity storage body 20 is covered with the cap portion 36b. Further, when the lid portion 36 is closed, the frame portion 36a is laminated on the frame portion 34a as shown in FIG. 1.

### Production Method for Battery Cell 10

First, the negative electrode current collection foils 23 and the positive electrode current collection foils 25 are alternately laminated with the separators 27 therebetween. The first foil collection portion 24 is formed by bundling the tabs 23t of the negative electrode current collection foils 23. The foil joining mark 24M is formed at the first foil collection portion 24, by foil joining. Next, the first electrode portion 41 is brought into contact with the upper surface of the first foil collection portion 24 and joined thereto by laser joining or the like. Thereby, the electrode joining mark 41M is formed on the upper surface of the first electrode portion 41.

As shown in FIG. 4, the electricity storage body 20 to which the first electrode portion 41 has been joined is disposed in the cup portion 34b of the outer package body 30. Thereafter, the outer package body 30 is welded at the weld portion 70, in a state where the lid portion 36 is closed, so that the battery cell 10 is completed. By this method, the battery cell 10 can be easily produced.

### Effects

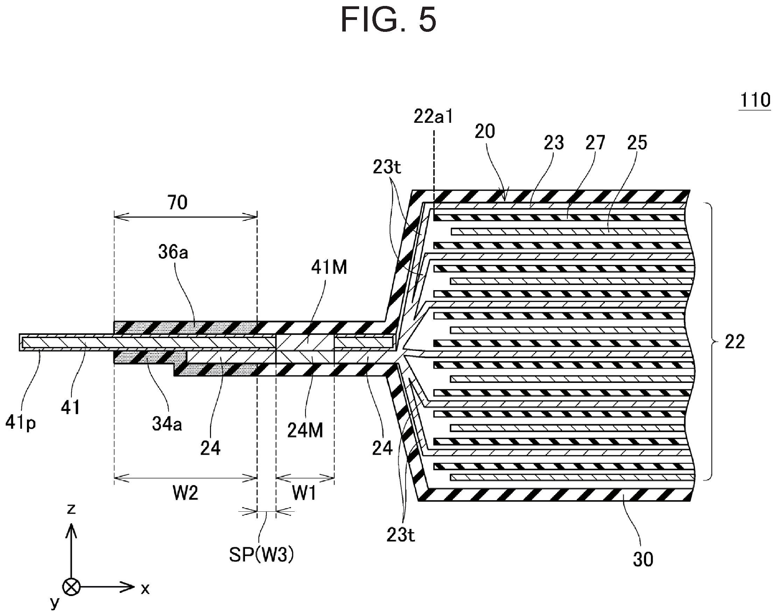

A problem will be described with a battery cell 110 in a comparative example in FIG. 5. FIG. 5 is a sectional view of the same site as FIG. 3. Further, sites in common between the battery cell 110 (FIG. 5) in the comparative example and the battery cell 10 (FIG. 3) in the embodiment are denoted by identical reference characters. In the battery cell 110 in the comparative example, the foil joining mark 24M and the electrode joining mark 41M are positioned on an inner side (+x-directional side) in the outer package body 30, than the weld portion 70 is. That is, the weld portion 70 is disposed so as to be away from the foil joining mark 24M and the electrode joining mark 41M. Accordingly, the foil joining mark 24M and the electrode joining mark 41M are disposed so as to be arrayed with the weld portion 70 in the x-direction, through a space SP. The foil joining mark 24M and the electrode joining mark 41M have a width W1 in the x-direction. The weld portion 70 has a width W2 in the x-direction. The space SP has a width W3 in the x-direction. Moreover, the first electrode portion 41 protrudes in the -x-direction, by a quantity corresponding to an array of the widths W1 to W3. The dimension of the battery cell 110 on the -x-directional side is increased.

In contrast, in the structure of the battery cell 10 in the embodiment, the foil joining mark 24M and the electrode joining mark 41M are positioned in the weld portion 70. Thereby, the width W1 of the foil joining mark 24M and the electrode joining mark 41M can be included in the range of the width W2 of the weld portion 70. Accordingly, the protrusion amount in the -x-direction can be restrained by a quantity corresponding to the width W1. Further, the space SP can be eliminated, and therefore, the protrusion amount in the -x-direction can be restrained by a quantity corresponding to the width W3. In the battery cell 10 in the embodiment, the dimension in the x-direction (that is, the lateral direction) can be shortened compared to the battery cell 110 in the comparative example. Since the battery cell 10 can be downsized, the size of the battery module can be lessened when the battery module is constituted by the lamination of the battery cells 10. Accordingly, the battery module can store electric power at a high energy density.

In the laminate film that constitutes the outer package body 30, a sealant layer is formed on the innermost surface. As the material of the sealant layer, for example, polypropylene is used. Moreover, the sealant layer is welded to the surface of the first electrode portion 41. However, in the case where the first electrode portion 41 contains copper, the compatibility between copper and the sealant layer is poor, and therefore, it is sometimes hard to weld the sealant layer to the first electrode portion 41. Hence, in the battery cell 10 in the embodiment, a plating layer 41p containing no copper is disposed on the surface of the first electrode portion 41. Thereby, it is possible to improve the compatibility between the first electrode portion 41 and the sealant layer. It is possible to enhance the weld strength between the first electrode portion 41 and the laminate film.

### Modification of Embodiment 1

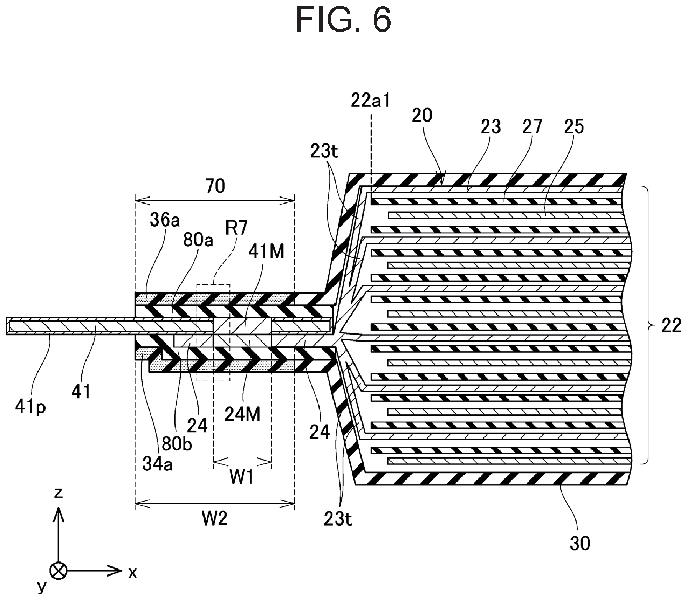

FIG. 6 shows a sectional view in a modification. FIG. 6 (modification) is different from FIG. 3 (embodiment 1), only in that fillers 80a, 80b are included. Only a portion unique to the modification will be described below.

Each of the fillers 80a, 80b is a resin member having a sheet shape. Each of the fillers 80a, 80b is called also a sealant, and is a member that allows pressure bonding by heating. The filler 80a is disposed between the upper surface of the first electrode portion 41 and the frame portion 36a of the outer package body 30. Further, the filler 80a covers the whole of the electrode joining mark 41M and the foil joining mark 24M, as viewed from the +z-direction. The filler 80b is disposed between the lower surface of the first foil collection portion 24 and the frame portion 34a of the outer package body 30. Further, the filler 80b covers the whole of the foil joining mark 24M, as viewed from the -z-direction.

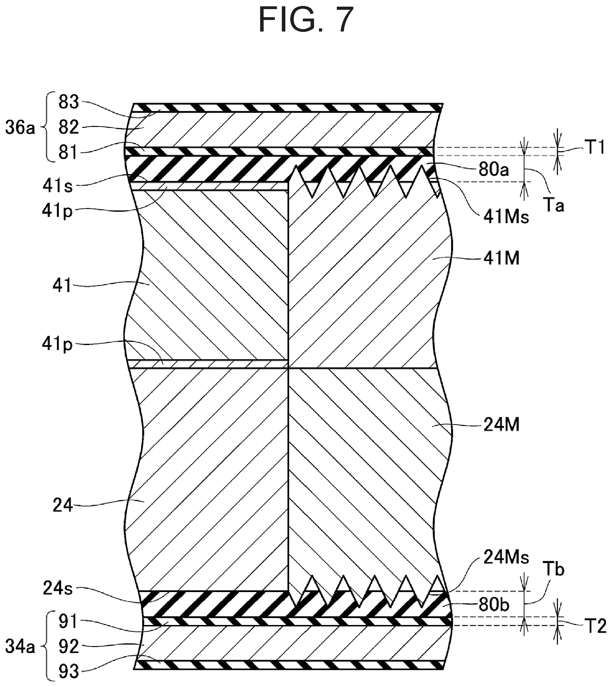

FIG. 7 is a partial enlarged view of a region R7 in FIG. 6. The region R7 is a region that includes the electrode joining mark 41M and the foil joining mark 24M. The filler 80a is welded to upper surfaces 41Ms, 41s. The filler 80a has a thickness Ta. The frame portion 36a is welded to a surface of the filler 80a. The frame portion 36a has a structure in which an aluminum layer 82 is sandwiched between sealant layers 81, 83. The sealant layers 81, 83 are insulation layers, and for example, various resin layers may be adopted. The sealant layer 81 has a thickness T1.

The filler 80b is welded to lower surfaces 24Ms, 24s. The filler 80b has a thickness Tb. The frame portion 34a is welded to a surface of the filler 80b. The frame portion 34a has a structure in which an aluminum layer 92 is sandwiched between sealant layers 91, 93. The sealant layer 91 has a thickness T2.

The upper surface 41Ms of the electrode joining mark 41M has a larger surface roughness than the upper surface 41s of the first electrode portion 41. The upper surface 41Ms of the electrode joining mark 41M has a surface roughness Rz1. Further, the lower surface 24Ms of the foil joining mark 24M has a larger surface roughness than the lower surface 24s of the first foil collection portion 24. The lower surface 24Ms of the foil joining mark 24M has a surface roughness Rz2. Each of the surface roughnesses Rz1, Rz2 is a maximum height roughness, and is a roughness that is defined in JIS B 0601.

The thickness Ta of the filler 80a is larger than the surface roughness Rz1 of the upper surface 41Ms, and is larger than the thickness T1 of the sealant layer 81. Further, the thickness Tb of the filler 80b is larger than the surface roughness Rz2 of the lower surface 24Ms, and is larger than the thickness T2 of the sealant layer 91.

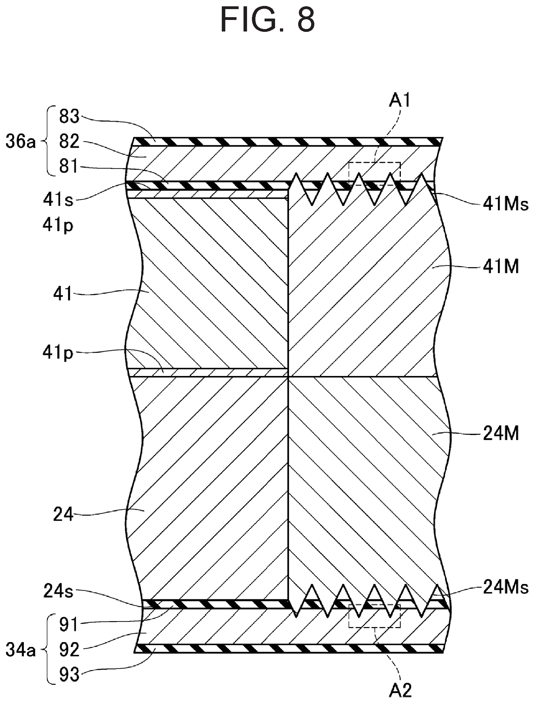

A problem will be described with a comparative example in FIG. 8. FIG. 8 is a sectional view of the same site as FIG. 7. In the comparative example in FIG. 8, the fillers 80a, 80b are not included. In this case, a through-hole is sometimes formed on the sealant layer 81, by a projection shape on the upper surface 41Ms of the electrode joining mark 41M. When a projection of the upper surface 41Ms penetrates the sealant layer 81 and reaches the aluminum layer 82, there is fear that the short circuit with the exterior occurs (see a region A1). Similarly, when a projection of the lower surface 24Ms of the foil joining mark 24M penetrates the sealant layer 91 and reaches the aluminum layer 92, there is fear that the short circuit with the exterior occurs (see a region A2).

In contrast, in the modification in FIG. 7, the electrode joining mark 41M is covered with the filler 80a. Since the thickness Ta of the filler 80a is larger than the surface roughness Rz1 of the upper surface 41Ms, it is possible to restrain the projection of the upper surface 41Ms from piercing through the filler 80a. It is possible to prevent the projection of the upper surface 41Ms from reaching the aluminum layer 82, and therefore, it is possible to prevent the occurrence of the short circuit with the exterior. Further, the foil joining mark 24M is covered with the filler 80b. Since the thickness Tb of the filler 80b is larger than the surface roughness Rz2 of the lower surface 24Ms, it is possible to restrain the projection of the lower surface 24Ms from piercing through the filler 80b. Thereby, it is possible to prevent the occurrence of the short circuit with the exterior.

Only one of the fillers 80a, 80b may be included.

### Embodiment 2

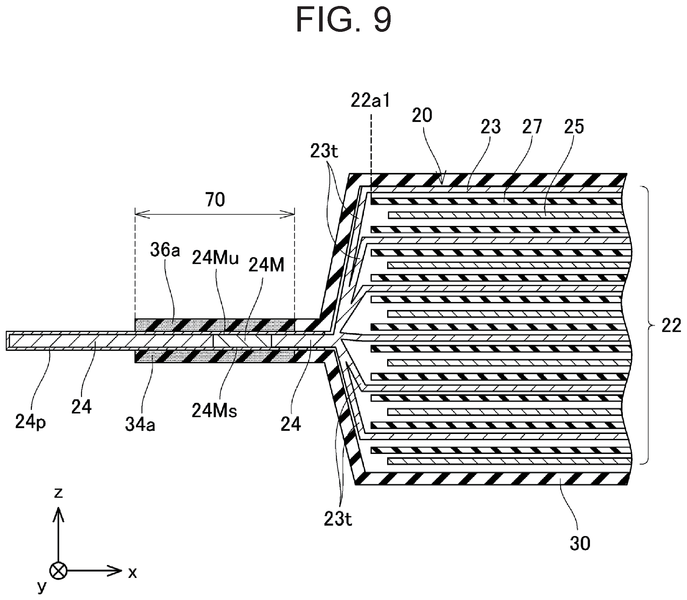

In an embodiment 2, a configuration in which the first foil collection portion 24 protrudes from the outer package body 30 to the exterior will be described. Sites in common between the embodiment 1 and the embodiment 2 are denoted by identical reference characters, and descriptions thereof are omitted. FIG. 9 shows a sectional view in the embodiment 2. FIG. 9 (embodiment 2) shows a section of the same site as the site in FIG. 3 (embodiment 1). Only a portion unique to the embodiment 2 will be described below.

In a battery cell 10 in the embodiment 2, the first electrode portion 41 is not included. Moreover, the first foil collection portion 24 passes through between joining surfaces of the frame portion 36a and the frame portion 34a, and extends from the inside of the outer package body 30 to the outside of the outer package body 30. At the first foil collection portion 24, the foil joining mark 24M is formed.

The first foil collection portion 24 is composed of a material containing copper. For example, the material of the first foil collection portion 24 may be a copper foil. On the surface of the first foil collection portion 24, a plating layer 24p having electrically conductive property is disposed. The plating layer 24p is composed of a material containing no copper.

The plating layer 24p can be formed after the foil joining mark 24M is formed at the first foil collection portion 24. The plating layer 24p may be formed by various methods. For example, a plating method of performing application using a pen, or a plating method of performing spraying can be used.

### Effects

In the structure of the battery cell 10 in the embodiment 2, the first foil collection portion 24 can function also as an electrode pad for the electric connection with the exterior. It is not necessary to separately include electrode components for the electrode pad, and therefore, it is possible to achieve the downsizing and cost reduction of the battery cell 10. The second foil collection portion 26 can exert the same effect as the first foil collection portion 24.

In the embodiment 2, the plating layer 24p containing no copper is disposed on the surface of the first foil collection portion 24. Thereby, it is possible to improve the compatibility between the first foil collection portion 24 and the outer package body 30, and thereby, it is possible to enhance the weld strength.

Since the plating layer 24p is formed on the surface of the foil joining mark 24M, it is possible to reduce the surface roughness of the foil joining mark 24M. Thereby, it is possible to enhance the weld strength between the foil joining mark 24M and the outer package body 30.

### Modification of Embodiment 2

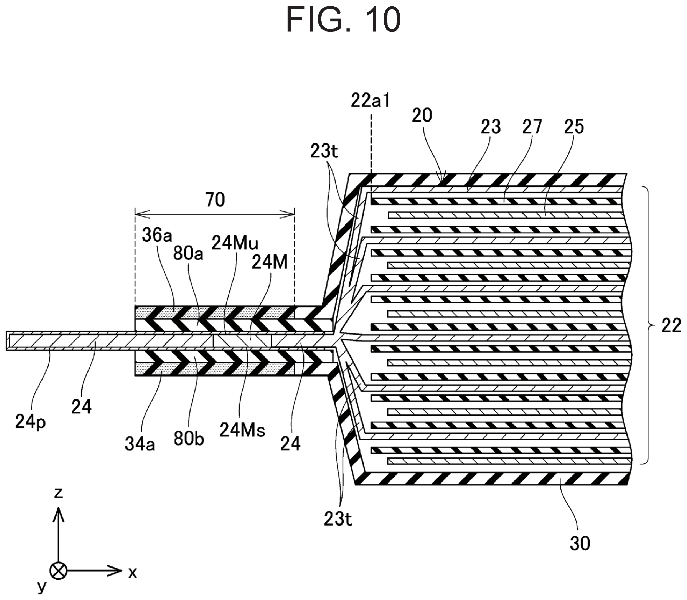

FIG. 10 shows a sectional view in a modification. FIG. 10 (modification) is different from FIG. 9 (embodiment 2), only in that fillers 80a, 80b are included. Only a portion unique to the modification will be described below.

The filler 80a is disposed between the upper surface of the first foil collection portion 24 and the frame portion 36a of the outer package body 30. Further, the filler 80a covers the whole of the foil joining mark 24M, as viewed from the +z-direction. The filler 80a has a thickness Ta. The filler 80b is disposed between the lower surface of the first foil collection portion 24 and the frame portion 34a of the outer package body 30. Further, the filler 80b covers the whole of the foil joining mark 24M, as viewed from the -z-direction. The filler 80b has a thickness Tb.

An upper surface 24Mu and lower surface 24Ms of the foil joining mark 24M have a surface roughness Rz2. The surface roughness Rz2 is a maximum height roughness in accordance with JIS B 0601. The thickness Ta of the filler 80a and the thickness Tb of the filler 80b are larger than the surface roughness Rz2.

An effect will be described. The foil joining mark 24M is covered with the fillers 80a, 80b. Since the thickness Ta and the thickness Tb are larger than the surface roughness Rz2, it is possible to restrain the projection of the foil joining mark 24M from piercing through the fillers 80a, 80b. It is possible to prevent the occurrence of the short circuit with the exterior.

Only one of the fillers 80a, 80b may be included.

### Other Modifications

In the above embodiments, the case where the first side surface 22a1 and the second side surface 22a2 are positioned in the shorter direction of the electrode laminate body 22 has been described, but the present disclosure is not limited to this form. The first side surface 22a1 and the second side surface 22a2 may be side surfaces in the longer direction of the electrode laminate body 22.

Each of the first electrode portion 41 and the second electrode portion 42 can have various shapes and structures, and for example, may be divided into a plurality of components.

The z-direction is an example of the first direction. The x-direction is an example of the second direction. The negative electrode current collection foil 23 is an example of the first electrode sheet. The positive electrode current collection foil 25 is an example of the second electrode sheet. The foil joining mark 24M is an example of the first joining mark. The electrode joining mark 41M is an example of the second joining mark. The frame portion 36a is an example of the first circumferential edge portion. The frame portion 34a is an example of the second circumferential edge portion. The first electrode portion 41 is an example of the external terminal.

The embodiments have been described above in detail. The embodiments are just examples, and do not limit the scope of the claims. The technology described in the claims includes various modifications and alterations of the above-described specific examples. The technical elements described in the present specification or the drawings exhibit technical utility independently or in various combinations, and are not limited to the combinations described in the claims at the time of the filing. Further, the technology exemplified in the present specification or the drawings concurrently achieves a plurality of purposes, and has technical utility simply by achieving one of the purposes.

## Claims

1. A battery cell (10) comprising:
a laminate body including a plurality of first electrode sheets (23) and a plurality of second electrode sheets (25) that are laminated along a first direction; and
an outer package body (30) constituted by a film material and configured to house the laminate body, wherein:
each of the first electrode sheets (23) includes a tab (23t) that protrudes in a second direction orthogonal to the first direction;
the tabs (23t) of the first electrode sheets (23) constitute a foil collection portion (24) such that the tabs (23t) are joined to each other;
the foil collection portion (24) includes a first joining mark (24M) at a joining portion of the tabs (23t);
the outer package body (30) includes a weld portion (70) where a first circumferential edge portion and a second circumferential edge portion of the film material are welded to each other; and
the first joining mark (24M) is positioned in the weld portion (70).

2. The battery cell (10) according to claim 1, further comprising an external terminal joined to the foil collection portion (24) and extending to an exterior of the outer package body (30), wherein:
the external terminal includes a second joining mark at a joining portion between the foil collection portion (24) and the external terminal; and
the second joining mark is positioned in the weld portion (70).

3. The battery cell (10) according to claim 2, further comprising a filler having a sheet shape and disposed between the outer package body (30) and the second joining mark in the weld portion (70).

4. The battery cell (10) according to claim 3, wherein a thickness of the filler is larger than a maximum height roughness of a surface of the second joining mark.

5. The battery cell (10) according to claim 2, wherein:
the external terminal contains copper; and
a plating layer containing no copper is disposed on a surface of the external terminal.

6. The battery cell (10) according to claim 1, wherein the foil collection portion (24) passes through the weld portion (70), and extends to an exterior of the outer package body.

7. The battery cell (10) according to claim 6, further comprising a filler having a sheet shape and disposed between the outer package body (30) and the first joining mark (24M) in the weld portion (70).

8. The battery cell (10) according to claim 7, wherein a thickness of the filler is larger than a maximum height roughness of a surface of the first joining mark (24M).

9. The battery cell (10) according to claim 6, wherein:
the foil collection portion contains copper; and
a plating layer containing no copper is disposed on a surface of the foil collection portion.
